# EUROPEAN PATENT APPLICATION

(11) **EP 4 492 596 A1**
(43) Date of publication of application: **15.01.2025**
(21) Application number: 24152825.6
(22) Date of filing: 19.01.2024
(51) Int. Cl.: H02G 1/08, B65H 27/00

(54) **DEVICE FOR PREVENTING TWISTING AND SLIPPING OF FISH TAPE**

(30) Priority: 13.07.2023 KR 20230091334
(71) Applicant: Taesung Co., Ltd., Yeongju-si Gyeongsangbuk-do 36044 (KR)
(72) Inventor: KIM, Kwang Soo, 36015 Yeongju-si, Gyeongsangbuk-do (KR)
(74) Representative: M. Zardi & Co S.A.

(57) **Abstract**

Disclosed herein is a device for preventing the twisting and slipping of a fish tape. The device for preventing the twisting and slipping of a fish tape includes: a tube body formed in an arc shape, and configured such that a wire is wound therein; a wire entry prevention tube connected from the outside of the tube body to one side of the tube body so that the insides of the wire entry prevention tube and the tube body communicate with each other, and configured such that one end of the wire is inserted thereinto; and a slipping prevention member provided inside the wire entry prevention tube, and configured to support the wire inserted into the wire entry prevention tube and prevent the one end of the wire from slipping into the inside of the tube body.

## Description

### CROSS-REFERENCE TO RELATED APPLICATION

This application claims the benefit of Korean Patent Application No. 10-2023-0096493 filed on July 25, 2023, which is hereby incorporated by reference herein in its entirety.

### BACKGROUND

### 1. Technical Field

The present invention relates to a device for preventing the twisting and slipping of a fish tape, and more specifically, to technology in which, when a fish tape is stored after use, the fish tape can be wound in a ring shape without being twisted and an end of the fish tape can be fixed by a separate means to prevent the end of the fish tape from slipping into the inside of the device, so that there can be maintained the state in which the fish tape can be easily separated from the device when the fish tape is used again.

### 2. Description of the Related Art

In general, a fish tape is a tool for inserting various types of wires for supply and distribution of power and signals, such as an electrical wire, a telephone line, and a communication line, into protection pipes of a building. A fish tape is fabricated by twisting at least two pieces of piano wire or spring wire made of a material that causes little bending.

Such fish tapes are used in the field and then stored again for reuse. Since the lengths of the fish tapes line are long, they are stored in the state of being wound in a ring shape. However, problems arise in that the fish tapes are twisted in the process of winding the fish tapes, or the fish tapes are disorganized and tangled or twisted during storage even when they were wound appropriately.

When the fish tapes are tangled or twisted as described above, the operation of untangling them must be performed again, which causes the problems of delaying field work and increasing the fatigue of operators.

In order to overcome the problem in which the fish tapes were twisted, the present applicant proposed a mechanism for preventing a fish tape from being twisted as in Korean Utility Model Registration No. 20-0487253. The mechanism for preventing a fish tape from being twisted proposed in Korean Utility Model Registration No. 20-0487253 prevents a fish tape from being twisted or tangles in such a manner that a fish tape is inserted through an insertion hole provided in the outer surface of one side of a semi-ring-shaped tube body and thus the fish tape can be introduced at a predetermined position.

However, in the prior art known so far, including the technology disclosed in Korean Utility Model Registration No. 20-0487253, a problem arises in that one end of a fish tape that protrudes to the outside slips into the inside of a tube body due to shaking or vibration that occurs during storage or movement.

As described above, when one end of the fish tape is not maintained in the state of protruding out of the tube body but slips into the inside of the tube body, it is not easy to find the one end of the fish tape, so that it takes a lot of time to untangle the fish tape, which causes a decrease in work efficiency.

### [Related Art Document]

Patent Document: Korean Utility Model Registration No. 20-0487253 entitled "Device for Preventing Fish Tape from Being Twisted"

### SUMMARY

The present invention has been conceived to overcome the above-described problems, and an object of the present invention is to provide a device for preventing the twisting and slipping of a fish tape in which, when a fish tape is wound and stored in a ring shape after use, parts of the fish tape can be accommodated to prevent the fish tape from being twisted or tangled through the device of the present invention, and there is provided an additional structure for preventing an end of the fish tape from slipping into the device of the present invention in the state in which the fish tape is stored, so that the fish tape can be stored in an organized form, thereby improving convenience of use.

According to an aspect of the present invention, there is provided a device for preventing the twisting and slipping of a fish tape, the device including: a tube body formed in an arc shape, and configured such that a wire is wound therein; a wire entry prevention tube connected from the outside of the tube body to one side of the tube body so that the insides of the wire entry prevention tube and the tube body communicate with each other, and configured such that one end of the wire is inserted thereinto; and a slipping prevention member provided inside the wire entry prevention tube, and configured to support the wire inserted into the wire entry prevention tube and prevent the one end of the wire from slipping into the inside of the tube body.

The tube body and the wire entry prevention tube may be integrated with each other, and may be cut in half on both sides to form a first body and a second body.

The first body and the second body may be connected to each other through a hinge portion that allows separation and coupling via a single rotation shaft.

The slipping prevention member may be applied as a rubber pipe made of an elastic material that matches the inner diameter of the wire entry prevention tube and be then inserted into the wire entry prevention tube, the wire may be inserted into a hollow portion formed through the center of the rubber pipe in such a manner that the wire penetrates the hollow portion, and the outer peripheral surface of the one end of the wire may come into close contact with the inside of the hollow portion so that the wire is supported to prevent slipping.

The slipping prevention member may be applied as a protrusion portion formed on the inside of the wire entry prevention tube in an integrated manner, and the outer peripheral surface of the one end of the wire may come into close contact with the protrusion portion so that the wire is supported to prevent slipping.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a perspective view showing a device for preventing the twisting and slipping of a fish tape according to a first embodiment of the present invention;
FIG. 2 is a plan view of the first and second bodies of the device for preventing the twisting and slipping of a fish tape according to the present invention in an unfolded state;
FIG. 3 is a sectional view showing the internal structure of the device for preventing the twisting and slipping of a fish tape according to the first embodiment of the present invention;
FIGS. 4 and 5 are diagrams showing the process of coupling the first and second bodies through a hinge portion and coupling elements according to the present invention;
FIG. 6 is a view showing another embodiment in which a pressing ring is further applied in the first embodiment of the present invention;
FIGS. 7 and 8 are enlarged views showing the process of generating pressure in a rubber pipe through the pressing ring of the present invention;
FIG. 9 is a sectional view showing a device for preventing the twisting and slipping of a fish tape according to a second embodiment of the present invention;
FIG. 10 is an enlarged view of a protrusion portion applied to the second embodiment of the present invention; and
FIG. 11 is a view showing an embodiment in which a cutout window is further formed in the tube body of the present invention.

### DETAILED DESCRIPTION

Embodiments of the present invention will be described in detail below as follows. In the following description of the present invention, when it is determined that a detailed description of a related known function or configuration may unnecessarily obscure the gist of the present invention, the detailed description will be omitted.

A device for preventing the twisting and slipping of a fish tape according to the present invention includes: a tube body 10 formed in an arc shape, and configured such that a wire W is wound therein; a wire entry prevention tube 20 connected from the outside of the tube body 10 to one side of the tube body 10 so that the insides of the wire entry prevention tube 20 and the tube body 10 communicate with each other, and configured such that one end W1 of the wire W is inserted thereinto; and a slipping prevention member 30 provided inside the wire entry prevention tube 20, and configured to support the wire W inserted into the wire entry prevention tube 20 and prevent the one end W1 of the wire W from slipping into the inside of the tube body 10.

The device for preventing the twisting and slipping of a fish tape according to the present invention is intended to store various types of wires W such as an electrical wire, a communication line, a power line, a wire, etc. The device for preventing the twisting and slipping of a fish tape guides the wire W so that it can be stored inside the tube body 10 in a ring shape to prevent it from being twisted or tangled, and prevents one end W1 of the wire W from slipping into the tube body 10 or prevents the one end W1 of the wire W from being excessively drawn out, thereby improving convenience of use.

The tube body 10 is a component through which the wire W is wound therein, and is formed in an arc shape corresponding to a part of a wound ring so that the wire W can be guided in a ring shape. Since a fish tape applied to the wire W has a predetermined level of strength, it can be guided and wound in a ring shape even when the tube body 10 corresponds to a part of a wound ring shape.

The tube body 10 is preferably made of synthetic resin to facilitate mass production, and may be separately coated to prevent scratches from occurring on the inside thereof during the insertion of the wire W.

The wire entry prevention tube 20 of the present invention is another tube connected to the tube body 10 from the outside of the tube body 10, and is formed to have a smaller diameter than the tube body 10. The passage of the wire entry prevention tube 20 and the passage of the tube body 10 are connected to each other, and the passage of the wire entry prevention tube 20 is connected to the passage of the tube body 10. Accordingly, the wire W inserted into the wire entry prevention tube 20 extends to the inside of the tube body 10.

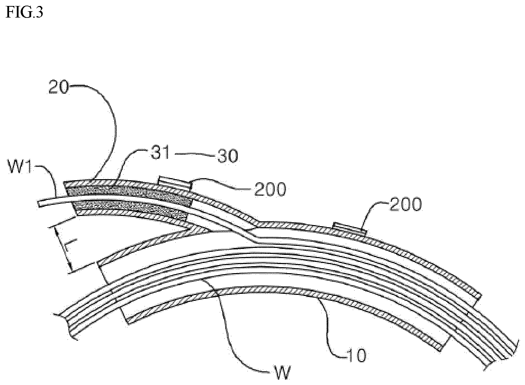

The wire entry prevention tube 20 is integrated with the tube body 10, and has a shape that protrudes outward from the tube body 10. It is desirable to increase convenience of use by setting a separation distance L from the tube body as shown in FIG. 3 so that the entrance of the wire entry prevention tube 20 can provide a clear sense of separation.

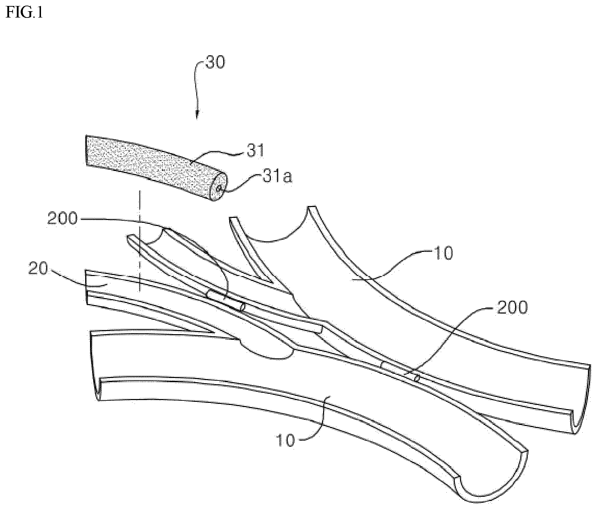

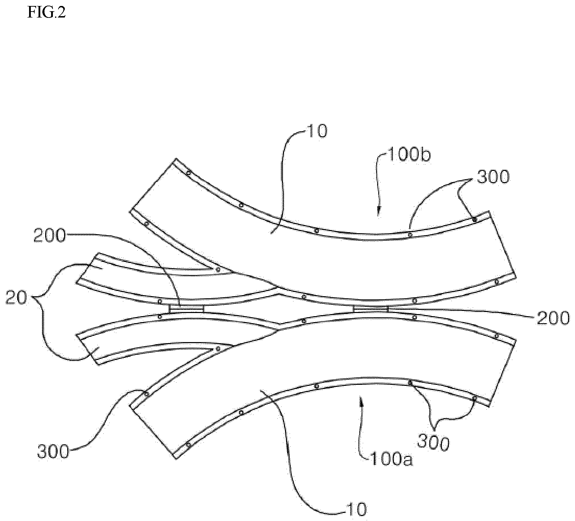

In addition, it is preferable that the tube body 10 and the wire entry prevention tube 20 according to the present invention are cut in half on both sides to form a first body 100a and a second body 100b, as shown in FIGS. 1 and 2.

When the device of the present invention is composed of the first body 100a and the second body 100b as described above, it has the structural advantages of allowing the wire W to be easily removed during use and also making it easy to remove foreign materials from the inside thereof.

When the first body 100a and the second body 100b according to the present invention are connected to each other through a hinge part 200 that allows separation and coupling via a single rotation shaft, convenience of use may be improved. The hinge part 200 may be formed only on the tube body 10. In contrast, when the hinge part 200 is formed on each of the tube body 10 and the wire entry prevention tube 20 as shown in the drawings, the hinge part 200 may be stably folded. Furthermore, when the first body 100a and the second body 100b are overlaid on each other, the halves of the wire entry prevention tube 20 may come into contact with each other at precise positions.

In addition, the hinge part 200 is preferably formed outside the arc of the tube body 10 to prevent interference when unfolded and folded.

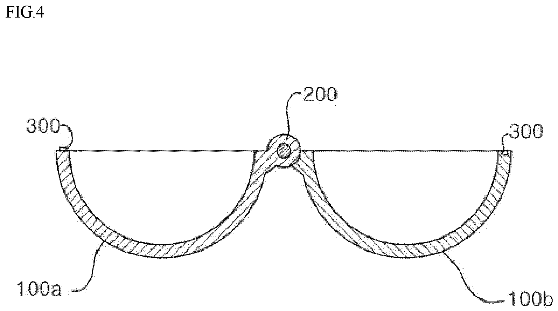

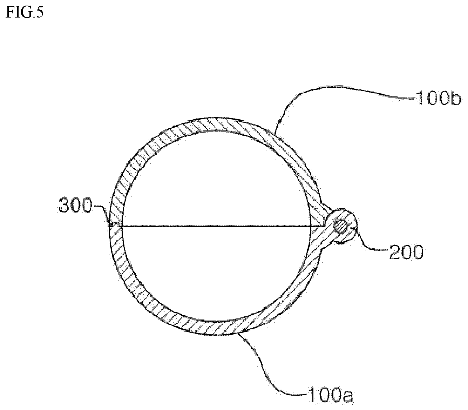

In addition, coupling elements 300 are formed on portions where the first body 100a and the second body 100b come into contact with each other in order to maintain a coupled state when the first body 100a and the second body 100b come into contact with each other. Although the shapes of the coupling elements 300 may be various, they may be formed in protrusion and depression shapes and fitted into each other, as shown in FIGS. 4 and 5.

As described above, the slipping prevention member 30 of the present invention is provided inside the wire entry prevention tube 20 and supports the wire W inserted into the wire entry prevention tube 20, thereby preventing the one end W1 of the wire W from slipping into the inside of the tube body 10.

Accordingly, the slipping prevention member 30 of the present invention may be basically classified into two types of embodiments. First, in a first embodiment, as shown in FIG. 1 or 3, a rubber pipe 31 made of an elastic material that matches the inner diameter of the wire entry prevention tube 20 is applied and inserted and the wire W is inserted into a hollow portion 31a formed through the center of the rubber pipe 31 in such a manner that the wire W penetrates the hollow portion 31a, so that the outer peripheral surface of the one end W1 of the wire can come into close contact with the inside of the hollow portion 31a and thus the wire W can be supported without slipping.

The slipping prevention member 30 of the first embodiment is applied as the rubber pipe 31 made of an elastic material. The hollow portion 31a corresponding to the diameter of the wire W is formed through the center of the rubber pipe 31 and the wire W is inserted into the hollow portion 31a so that the wire W does not slip and is fixed due to friction. In this case, the shape of the hollow portion 31a may be formed not only in a circular shape but also in various shapes such as square, hexagon, octagon, and star shapes, etc.

The rubber pipe 31 is not divided and is formed in a single structure. The rubber pipe 31 is seated on the wire entry prevention tube 20 of the first body 100a or the second body 100b and is then coupled to other parts through the hinge part 200 and the coupling elements 300. In order to prevent the rubber pipe 31 from moving, a stopper may be formed on the inside of the wire entry prevention tube 20 or a depression may be formed in the outside of the rubber pipe 31, thereby holding the rubber pipe 31 without movement.

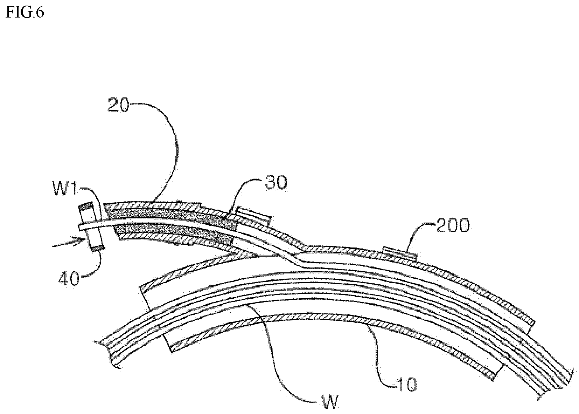

FIG. 6 shows another embodiment in which a pressing ring 40 is further applied in the first embodiment. The wire entry prevention tube 20 is formed in a shape in which the outer diameter of the wire entry prevention tube 20 increases gradually. The pressing ring 40 is fitted over the wire entry prevention tube 20 with the wire W inserted thereinto and transmits the force pressing the rubber pipe 31 toward the inside thereof, so that the force fixing the wire W can be further increased.

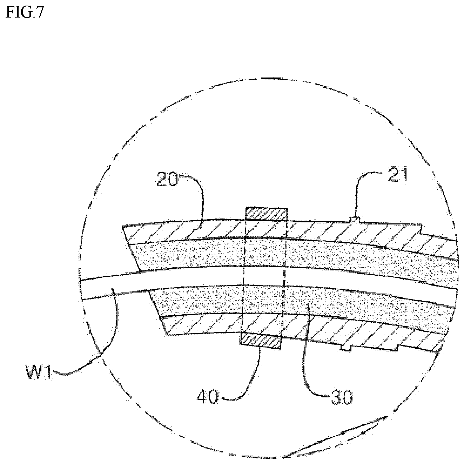

More specifically, as shown in FIG. 7, when the pressure ring 40 is fitted over the front part of the wire entry prevention tube 20, the diameter of the pressing ring 40 is almost similar to the outer diameter of the wire entry prevention tube 20. Accordingly, no pressure is generated by the pressing ring 40.

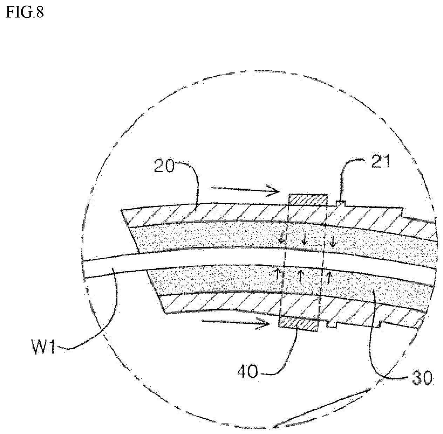

Thereafter, in order to fix the one end W1 of the wire W to the wire entry prevention tube 20, the pressing ring 40 is pushed into the portion of the wire entry prevention tube 20 having a wider diameter, as shown in FIG. 8, so that there is generated the pressure pressing the wire entry prevention tube 20 toward the inside of the wire entry prevention tube 20. In this process, as the wire entry prevention tube 20 is slightly deformed, the rubber pipe 31 is pressed, thereby fixing the wire W with strong pressure in the area where the pressing ring 40 is located.

When the wire W is separated, the pressing ring 40 may be removed in the reverse order. It is preferable that a stopper 21 is formed to protrude from the outside of the wire entry prevention tube 20 to prevent the pressing ring 40 from being fitted excessively deeply. Additionally, in order for a user to move the pressing ring 40 desirably, the surface of the pressure ring 40 may be knurled or a separate handle may be formed to protrude.

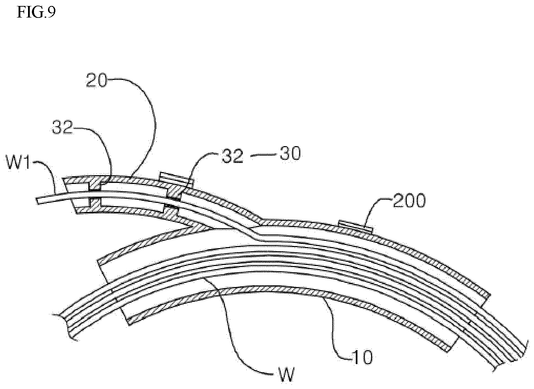

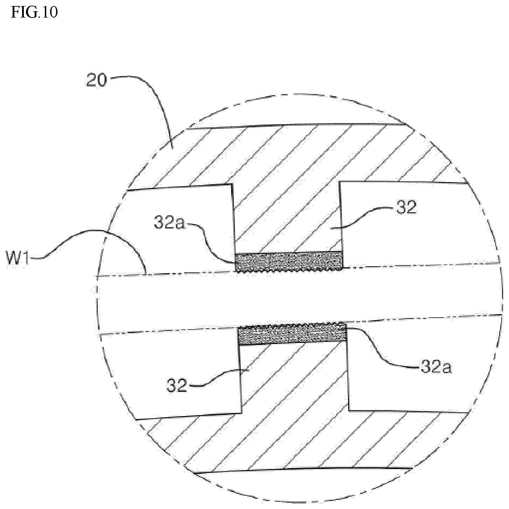

FIGS. 9 to 10 show a second embodiment of the slipping prevention member 30 of the present invention. The second embodiment of the slipping prevention member 30 is applied in the form of a protrusion portion 32 formed on the inside of the slipping prevention member 20 in an integrated manner, and the protrusion portion 32 comes into close contact with the outer peripheral surface of the one end W1 of the wire, so that the wire W can be supported from slipping.

The protrusion portion 32 is formed on the inside of the wire entry prevention tube 20 in an integrated manner. Although the protrusion portion 32 may be formed in one place, it is preferable to form protrusion portions 32 in two or more places so that two or more portions are supported as shown in the drawings.

As described above, the slipping prevention member 30 formed in the shape of the protrusions 32 is formed on the inside of the slipping prevention member 30 in an integrated manner, so that there are the advantages of increasing convenience of manufacture, lowering the production cost, and facilitating mass production.

However, the protrusion portion 32 is formed on the wire entry prevention tube 20 in an integrated manner, so that it is difficult to apply only the protrusion portion 32 as rubber. Accordingly, it is desirable to further form a coating layer 32a made of a material having high friction, such as rubber, at the end of the protrusion portion 32. To further increase friction, the surface may be formed in the shape of a saw blade.

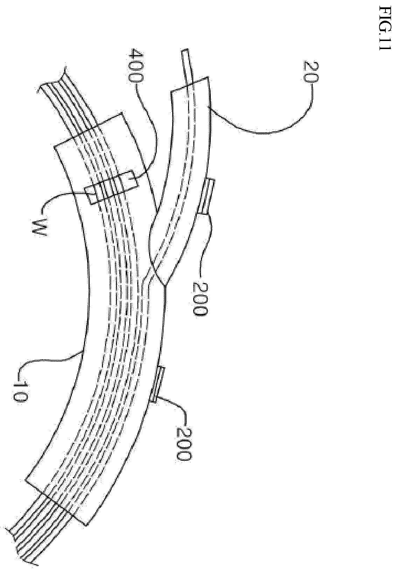

FIG. 11 shows another embodiment of the present invention in which a cutout window 400 is further formed in the tube body 10 of the present invention, so that how much of the wire W wound inside the tube body 10 remains can be visually checked, thereby increasing convenience of use. The cutout window 400 is preferably formed long in the widthwise direction of the tube body, so that a wide visible range can be achieved.

In addition, the cutout window 400 may be configured such that the inside thereof is visible as it is cut out, but the cutout portion of the cutout window 400 may be filled with a transparent material.

The present invention has an advantage in which, when a fish tape corresponding to a wire is wound and stored in a ring shape after use, the fish tape is prevented from being twisted or tangled through the device of the present invention, and an end of the fish tape is prevented from slipping into the device of the present invention, so that the fish tape can be stored in a desirably organized form, thereby improving convenience of use.

While the present invention has been described above with reference to the above embodiments, it is obvious that various modifications may be made within the scope of the technical spirit of the present invention.

## Claims

1. A device for preventing twisting and slipping of a fish tape, the device comprising:
a tube body formed in an arc shape, and configured such that a wire is wound therein;
a wire entry prevention tube connected from an outside of the tube body to one side of the tube body so that insides of the wire entry prevention tube and the tube body communicate with each other, and configured such that one end of the wire is inserted thereinto; and
a slipping prevention member provided inside the wire entry prevention tube, and configured to support the wire inserted into the wire entry prevention tube and prevent the one end of the wire from slipping into an inside of the tube body.

2. The device of claim 1, wherein the tube body and the wire entry prevention tube are integrated with each other, and are cut in half on both sides to form a first body and a second body.

3. The device of claim 2, wherein the first body and the second body are connected to each other through a hinge portion that allows separation and coupling via a single rotation shaft.

4. The device of claim 1, wherein the slipping prevention member is applied as a rubber pipe made of an elastic material that matches an inner diameter of the wire entry prevention tube and is then inserted into the wire entry prevention tube, the wire is inserted into a hollow portion formed through a center of the rubber pipe in such a manner that the wire penetrates the hollow portion, and an outer peripheral surface of the one end of the wire comes into close contact with an inside of the hollow portion so that the wire is supported to prevent slipping.

5. The device of claim 1, wherein the slipping prevention member is applied as a protrusion portion formed on an inside of the wire entry prevention tube in an integrated manner, and an outer peripheral surface of the one end of the wire comes into close contact with the protrusion portion so that the wire is supported to prevent slipping.
